# EUROPÄISCHE PATENTSCHRIFT

(11) **EP 3 312 351 B1**
(45) Veröffentlichungstag und Bekanntmachung des Hinweises auf die Patenterteilung: **15.04.2020**
(21) Anmeldenummer: 17195865.5
(22) Anmeldetag: 11.10.2017
(51) Int. Cl.: E03C 1/05, G01S 17/02

(54) **ÜBERWACHUNGSVORRICHTUNG FÜR EINE SANITÄRE ANLAGE**
MONITORING DEVICE FOR A SANITARY INSTALLATION
DISPOSITIF DE SURVEILLANCE POUR UNE INSTALLATION SANITAIRE

(30) Priorität: 20.10.2016 DE 102016120016
(43) Veröffentlichungstag der Anmeldung: 25.04.2018
(73) Patentinhaber: Aquis Systems AG, 9445 Rebstein (CH)
(72) Erfinder: Wallerstorfer, Kurt, 5204 Strasswalchen (AT); Wawrla,Andreas, 9445 Rebstein (CH)
(74) Vertreter: Otten, Roth, Dobler & Partner mbB Patentanwälte

(56) Entgegenhaltungen:
- EP-A1- 0 423 102
- EP-A1- 0 632 290
- WO-A1-2014/111286
- DE-A1-102007 011 183
- FR-A1- 3 026 119
- US-A1- 2015 268 342

## Beschreibung

Die Erfindung betrifft eine Überwachungsvorrichtung für eine sanitäre Anlage nach dem Oberbegriff des Anspruchs 1.

Aus dem Stand der Technik ist beispielsweise aus der DE 10 2007 011 183 B4 eine elektrisch betätigbare Sanitärarmatur mit einem Anwesenheitssensor großer Empfangsreichweite und einem weiteren Sensor mit kurzer Empfangsreichweite bekannt, wobei der Anwesenheitssensor mit langer Reichweite dazu ausgebildet ist, eine elektronische Steuereinheit von einem Schlafmodus in einen Arbeitsmodus überzuführen, wenn die Anwesenheit eines Benutzers detektiert wird. Ist dies der Fall, kann der kurzreichweitige Sensor über die Steuereinheit betrieben werden und ggf. die Armatur schalten.

Aufgabe der Erfindung ist es, eine Überwachungsvorrichtung für eine sanitäre Anlage bereitstellen zu können, bei der ein fehlerhafter Betriebsablauf vermieden werden kann.

Die Aufgabe wird, ausgehend von einer Überwachungsvorrichtung der eingangs genannten Art, durch die kennzeichnenden Merkmale des Anspruchs 1 gelöst.

Durch die in den abhängigen Ansprüchen genannten Maßnahmen sind vorteilhafte Ausführungen und Weiterbildungen der Erfindung möglich.

Dementsprechend umfasst die erfindungsgemäße Überwachungsvorrichtung für eine sanitäre Anlage einen ersten Sensor zur Überwachung der Anwesenheit von Personen in einem ersten Raumbereich in der Umgebung der sanitären Anlage, sowie des Weiteren einen zweiten Sensor zur Überwachung eines zweiten Raumbereichs in der Umgebung der sanitären Anlage.

Diese beiden Raumbereiche können grundsätzlich verschieden sein, und es ist meist vorteilhaft, wenn einer der beiden Raumbereiche größer ausgebildet ist als der des anderen Sensors, sodass in diesem grundsätzlich überprüft werden kann, ob eine Person zugegen ist oder nicht. Beispielsweise kann der zweite Raumbereich größer gewählt werden als der erste, weil z.B. der zweite Sensor, der den zweiten Raumbereich überwacht, grundsätzlich zur Überprüfung dient, ob sich Personen im weiteren Umfeld zur Sanitärarmatur befinden, währende der erste Sensor für den Nahbereich der Sanitärarmatur zuständig ist.

Der erste Sensor verfügt über einen Betriebsmodus und einen Stand-by-Modus, wobei im Betriebsmodus der Sensor detektiert, während im Stand-by-Modus ein Energiesparmodus vorliegt, in dem nicht oder zumindest nur sehr eingeschränkt Detektionen vorgenommen werden können, damit der Stromverbrauch gering gehalten werden kann.

Gerade dann, wenn ein Sensor etwa in einer Armatur verbaut wird, ist es oftmals gewünscht, dass dieser nicht mit dem Stromnetz verbunden, sondern durch eine Batterie oder einen Akkumulator betrieben wird. Da diese jedoch nur eine begrenzte Lebensdauer hat bzw. nach einiger Zeit wieder aufgeladen werden muss, ist es wünschenswert und vorteilhaft, den Stromverbrauch möglichst gering zu halten, damit nicht allzu häufig ein Austausch an der Armatur vorgenommen werden muss. Denkbar ist es grundsätzlich auch, dass der zweite Sensor über eine Batterie oder einen Akkumulator betrieben wird. Dieser zweite Sensor kann grundsätzlich auch in der Armatur integriert sein. Es ist aber auch denkbar, dass der zweite Sensor im weiter gefassten Bereich der sanitären Anlagen, nicht in der Nähe der Armatur, sondern bspw. in der Nähe einer Tür oder an der Decke im Eingangsbereich angeordnet ist.

Bei einer vorbestimmten Detektion des zweiten Sensors kann dieser den ersten Sensor vom Stand-by-Modus in den Betriebsmodus schalten. Der erste Sensor kann also dann, wenn kein Benutzer zugegen ist, in einem Stand-by-Modus verharren und darauf warten, bis ein Benutzer in den weiter gefassten Bereich der sanitären Anlage gelangt. Ist dies der Fall, wird der Benutzer zunächst vom zweiten Sensor detektiert. Über ein entsprechendes Signal des zweiten Sensors wird sodann der erste Sensor in den Betriebsmodus übergeführt und kann nun detektieren, ob der Benutzer ebenfalls im ersten Raumbereich erscheint. Ist dies wiederum der Fall, kann der erste Sensor einen Schaltvorgang auslösen, mit dem die sanitäre Anlage betrieben oder zumindest zum Betrieb freigegeben wird, bspw. eine Spülung oder der Wasserhahn angeschaltet oder zur Bedienung freigegeben wird, sodass das Wasser zu laufen beginnt oder nun eingeschaltet werden kann.

Die erfindungsgemäße Überwachungsvorrichtung zeichnet sich dadurch aus, dass der erste Sensor als Distanzsensor, insbesondere als ToF-Sensor ausgebildet ist (ToF: englische Abkürzung für Time of Flight). Derartige ToF-Sensoren besitzen den Vorteil, dass mit ihnen relativ genau eine Entfernung gemessen werden kann. Ein ToF-Sensor kann bspw. nach dem Prinzip arbeiten, dass ein Lichtsignal ausgesendet wird, auf welches ein Modulationssignal, das gegenüber der Lichtfrequenz vergleichsweise niederfrequent ist, aufmoduliert ist. Es existieren auch Varianten des ToF-Sensors, bei denen ein kurzer Lichtpuls ausgesandt wird, dessen Laufzeit unmittelbar bestimmt werden kann. Es sind verschiedene Betriebsmodi eines ToF-Sensors im Allgemeinen möglich.

Sodann wird mit einem Empfänger, der ebenfalls zum ToF-Sensor gehört, die Phasenverschiebung gemessen, sodass hieraus die Entfernung bzw. der Wegunterschied, den das Lichtsignal, das vom Sender ausgesendet wurde, durchlaufen hat, bestimmbar ist. Zur Auswertung der Laufzeiten bzw. Phasenverschiebungen können in einem ToF-Sensor z.B. Korrelationsmethoden verwendet werden, z.B. werden die photoinduzierten Ladungsträger also über einen Shutter in aufeinanderfolgenden Zeitintervallen unterschiedlichen Sammeleinheiten zugewiesen und dort zwischengespeichert. Hierüber kann schließlich der Phasenverlauf bestimmt werden.

Durch die Genauigkeit, die mit ToF-Sensoren erreicht wird, können z.B. Fehlauslösungen vermieden werden. Während herkömmliche Sensoren nach dem Stand der Technik z.B. als reine Reflexionssensoren ausgebildet sind, also ein Signal über einen Sender ausstrahlen und mit einem Empfänger die Intensität messen, die vom rückgestrahlten Signal kommt, kann, wie bereits beschrieben, bei ToF-Sensoren tatsächlich die Entfernung gemessen werden, ohne dass eine derart starke Abhängigkeit vom Reflexionsvermögen eines Objektes, zu dem die Entfernung vom ToF-Sensor bestimmt wird, eine Rolle spielt. Die Reflexionssensoren, welche herkömmlich nach dem Stand der Technik eingesetzt werden, arbeiten nämlich in der Regel nach dem Prinzip, dass grundsätzlich Objekte, die nah am Reflexionssensor gelegen sind, ein reflektiertes Signal höherer Intensität liefern als weiter entfernte Gegenstände. Strahlt der Sender in einen Raumwinkel ab, so verteilt sich die ausgestrahlte Leistung auf einer größeren Fläche, je weiter die Entfernung zum Sensor ist. Folglich wird durch die größere Entfernung das Signal stärker abgeschwächt.

Dieser Grundgedanke trägt jedoch keinesfalls dem Umstand Rechnung, dass diese Sensoren in der Lage sein sollen, die Entfernung zu unterschiedlichen Objekten mit unterschiedlichen physikalischen Eigenschaften zu messen. Unterschiedliche Objekte besitzen auch ein unterschiedliches Reflexionsvermögen, insbesondere dann, wenn diese eine andere Farbgebung besitzen. Auch die Oberflächenbeschaffenheit spielt eine große Rolle. Schwarze Körper absorbieren gewöhnlich mehr Licht als hellere Körper. Ist der Sensor zumindest teilweise in das Becken der Sanitäranlage, etwa ein Keramik-Waschbecken gerichtet, so ist von diesem aufgrund seiner glänzenden Oberflächenbeschaffenheit und aufgrund der in der Regel weißen oder hellen Farbe eine höheren Reflexion zu erwarten. Zu beachten ist insbesondere, dass derartige Sensoren meist im Infrarotbereich arbeiten. Im Infrarotbereich verhalten sich die Reflexions- und Abstrahlcharakteristiken der einzelnen Objekte wiederum anders als im sichtbaren Bereichs des Lichts. Somit kann es bei Vorrichtungen gemäß dem Stand der Technik zu Fehlauslösungen oder zu Fehleinschätzungen kommen, da die somit bestimmte Information zur Entfernung, die ausschließlich auf einer Intensitätsbetrachtung beruht, lediglich eine grobe Abschätzung darstellen kann. In vorteilhafter Weise kann gemäß der Erfindung daher nicht nur ein zuverlässigerer Betrieb gewährleistet werden, sondern es kann auch Energie eingespart und zudem kann der Wasserverbrauch verringert werden.

Außerdem wird durch die Kombination des ersten Sensors mit dem zweiten Sensor ermöglicht, dass der vergleichsweise hohe Stromverbrauch eines ToF-Sensors dadurch, dass dieser die meiste Zeit über im Stand-by-Modus verharren kann und nur dann angeschaltet wird, wenn er wirklich gebraucht wird, verringert wird. Die Umschaltung zwischen Stand-by- und Betriebsmodus kann über den zweiten Sensor erfolgen.

Erfindungsgemäß ist eine Kontrolleinheit zur Kontrolle des ersten Sensors vorgesehen, die dazu ausgebildet ist, in Abhängigkeit eines Ausgangsignals des ersten und des zweiten Sensors den ersten Sensor vom Betriebsmodus in den Stand-by-Modus zu schalten. Hiermit kann ein besonders sicherer Betrieb gewährleistet sein, weil oftmals nach dem Stand der Technik allenfalls Zeitschaltuhren vorgesehen werden, die sodann den Sensor oder das Stellglied in der Armatur schalten. Dies allein ist aber ein sehr ungenaues Verfahren, weil zum einen eine Person, die eine längere Benutzung des Wassers wünscht, das Wasser wieder einschalten muss. Wird ein Sensor nach einer gewissen Zeit in den Stand-by-Modus geschaltet, so reagiert dieser nicht mehr auf eine länger verweilende Person, und es muss dafür gesorgt werden, dass dieser Sensor auf eine andere Weise wieder eingeschaltet wird. Benötigt andererseits eine Person jedoch weniger Zeit, so läuft entweder das Wasser weiter, weil das Stellglied nicht betätigt wird, order aber der Sensor detektiert noch eine ganze Zeitlang, ohne weiter benötigt zu werden, weil die Person z.B. den Raum bereits verlassen hat. Gemäß der Erfindung kann aber in dem ersten und dem zweiten Raumbereich detektiert werden, ob sich eine Person darin befindet, d.h. sowohl z.B. im Nahbereich des ersten Raumbereichs als auch in z.B. in einem weiter gefassten Raum des zweiten Raumbereichs. Wird hier niemand detektiert, so befindet sich die Person weder in der Nähe der Armatur bzw. der sanitären Anlage noch im zweiten Raumbereich in der Umgebung der sanitären Anlage, sodass ein Übergang in den Stand-By Modus des ersten Sensors gerechtfertigt erscheint. Somit können auch in vorteilhafter Weise Fehler vermieden werden, wenn z.B. lediglich ein Sensor die Person nicht mehr wahrnehmen kann, was insbesondere dann der Fall ist, wenn sich der erste und der zweite Teilraum nur teilweise überlappen. Auch kann es sein, dass je nach Position der Person der erste oder der zweite Sensor diese nur noch schwer wahrnehmen können.

Bei einer vorteilhaften Weiterbildung der Erfindung ist der erste Sensor dazu ausgebildet, wenigstens zwei Teilbereiche des ersten Raumbereichs zu überwachen, welche Raumbereiche in der Umgebung der sanitären Anlage darstellen, wobei der erste Sensor ferner dazu ausgebildet ist, den Aktor der sanitären Anlage je nach Detektion in einem der wenigstens zwei Teilbereiche ein- bzw. auszuschalten. Je nach Detektion in einem der anderen der wenigstens zwei Teilbereiche kann der Aktor der sanitären Anlage entweder ein- bzw. ausgeschaltet werden, oder es wird eine quantitative Einstellung des Aktors vorgenommen. Diese wenigstens zwei Raumbereiche können grundsätzliche überlappende oder voneinander getrennte Raumbereiche sein. Der erste Sensor kann zu diesem Zweck entweder mehrere Teilsensoren umfassen, die jeweils die Überwachung unternehmen, oder aber es kann sich um einen ToF-Sensor handeln, der ähnlich wie eine Quadrantendiode verschiedene Bereiche für unterschiedliche Detektionsräume, die zu überwachen sind, aufweist. Die ToF-Sensoren können zu diesem Zweck z.B. eine aus Pixeln aufgebaute Empfängerstruktur bzw. eine Matrixstruktur im Empfänger aufweisen.

Um die Ausrichtung auf unterschiedliche Raumbereiche zu ermöglichen, kann entweder der Sensor bzw. können die Sensoren in ihrer Ausrichtung entsprechend justiert werden. Denkbar ist aber auch, dass eine Optik vorgesehen ist, die entsprechend so eingerichtet ist, dass der jeweils gewünschte Raumbereich bzw. Teilraumbereich überwacht wird.

Als Anwendungsbeispiel ist zu nennen, dass es ggf. vorkommen kann, dass Personen aus unterschiedlichen Gründen, darunter auch aus Unachtsamkeit, näher oder weiter weg von der Sanitärarmatur stehen. Oftmals passiert es, dass beim Händewaschen eine Person die Hände direkt unter den Auslass der Sanitärarmatur hält. Wird das Ventil der Sanitärarmatur zum Auslass des Wassers lediglich geöffnet, ohne dass Strom entsprechend zusätzlich begrenzt wird, so kann dies dazu führen, dass sich die Hände der Person so nah am Wasserauslass befinden, dass das Wasser wegspritzt und die Person mit Wasser bespritzt wird. Um dies zu vermeiden, bietet die vorgeschlagene Weiterbildung die Möglichkeit, das Ventil in einem solchen Fall, wenn die Person oder Teile der Person in einem bestimmten Teilraum detektiert werden, das Wasser mit geringerer Stärke und geringerem Druck aus dem Auslass herauszulassen. Ändert die Person ihre Position bzw. die Position ihrer Hände, und bringt diese bspw. in den zweiten Teilraumbereich, so wird dies durch den ersten Sensor detektiert und das Wasser kann z.B. schneller aus dem Auslass herausfließen, ohne dass die Person dabei nass wird.

Denkbar ist aber zudem, dass bestimmte Bewegungen wahrgenommen werden und die Armatur in sonstiger Weise geschaltet wird, z.B. auf einen Duschbetrieb oder einen Einstrahlbetrieb umgeschaltet wird.

Darüber hinaus ist es dennoch denkbar, zusätzlich über eine Zeitschaltuhr, eine vorbestimmte Zeitspanne zu warten, bis eine Umschaltung in den Stand-by-Modus erfolgt. Die entsprechenden Zeitspannen können ggf. auch sehr kurz gewählt sein. Auch hiermit können Fehler vermieden werden, wenn damit gerechnet werden kann, dass eine Person von beiden Sensoren zugleich in einem kurzen Intervall nicht wahrgenommen wird. In diesem Fall kann daher eine Umschaltung in den Stand-by-Modus, die nicht gewünscht ist, vermieden werden. Handelt es sich bspw. bei dem zweiten Sensor um einen Bewegungsmelder, so ist es denkbar, dass beide Sensoren keine Detektion vornehmen, weil die Person für den ersten Sensor (z.B. als ToF-Sensor) zu weit von dem Waschbecken entfernt steht, sich anderseits für einen kurzen Moment derart ruhig verhält, dass keine Bewegung von einem Bewegungssensor in Form des zweiten Sensors) wahrgenommen werden kann. Wird nämlich keine Detektion von beiden Sensoren in diesem Moment erfasst, so kann eine Zeitschaltuhr zu laufen beginnen, und sei es auch nur für wenige Sekunden, damit noch immer überprüft wird, ob dieser Zustand tatsächlich anhält.
Bei einem Ausführungsbeispiel der Erfindung kann der erste Sensor bzw. die Kontrolleinheit dazu ausgebildet sein, lediglich solche Signale auszuwerten bzw. weiterzuleiten oder weiter zu verarbeiten, welche in einem vorbestimmten Distanzbereich liegen. Hierdurch kann z.B. der Bereich unterhalb der Ausgangsöffnung eines Wasserhahns abgedeckt werden, sodass das Wasser nicht bereits zu laufen beginnt, wenn sich eine Person dem Waschbecken nähert, aber auch nicht dann, wenn diese z.B. seitlich an die Armatur greift und gar nicht in Erfassungsbereich des Wasserstrahls liegt. Auch bei Toiletten kann dies entsprechend eingesetzt werden. Ggf. kann auf diese Weise z.B. unterschieden werden, ob eine Person die sanitäre Anlage bedienen will oder z.B. reinigen will, und sich deshalb näher an die sanitäre Anlage begibt.

Wie bereits oben erörtert, kann der zweite Sensor als Bewegungssensor ausgebildet sein. Ein Bewegungsmelder zeichnet sich insbesondere in vorteilhafter Weise durch seinen geringen Energieverbrauch aus, da zu erwarten ist, dass der zweite Sensor über einen längeren Zeitraum in der Regel detektieren muss und sich daher öfter bzw. über längere Zeit im Betriebsmodus befindet als der erste Sensor. Der zweite Sensor kann grundsätzlich über die Detektion von Geräuschen arbeiten, aber auch z.B. Wärmestrahlungen detektierten bzw. im Infrarotbereich arbeiten.

Der erste Sensor kann bei einer vorteilhaften Weiterbildung zur Betätigung eines Aktors der sanitären Anlage ausgebildet sein. Somit kann er z.B. den Wasserlauf steuern und diesen ein- oder ausschalten. Dies ist auf mehrere Arten möglich. Zum einen kann der erste Sensor direkt mit dem Aktor hierzu verbunden werden. Denkbar ist, dass eine Elektronikeinheit vorgesehen ist, die diesen Aktor steuert, gleichgültig ob diese in den Aktor integriert ist, oder als separater Elektronikeinheit vorliegt und sodann mit dem ersten Sensor verbunden wird. Zudem kann der Sensor seine Ausgangssignale an die Kontrolleinheit abgeben, die entsprechend den Aktor ein-oder ausschaltet bzw. steuert oder regelt.

Insbesondere der erste Sensor kann sodann an der Armatur angebracht sein um einen ersten Raumbereich in unmittelbarer Nähe der Sanitärarmatur zu überwachen. Denkbar ist grundsätzlich auch, dass der zweite Sensor an der Armatur angebracht ist und z.B. so ausgerichtet ist, dass dieser einen zweiten Raumbereich überwacht. Auf diese Weise können insbesondere sehr kompakte Armaturen bzw. sanitäre Anlagen vorgesehen sein. Denkbar ist aber auch, dass der zweite Sensor separat im Raum angeordnet wird. Dieser kann drahtlos oder drahtgebunden z.B. mit dem ersten Sensor oder mit einer entsprechenden Kontrolleinheit kommunizieren.

Der erste und zweite Sensor können bei einem Ausführungsbeispiel auch in einen gemeinsamen Sensor integriert sein, sodass der benötigte Bauraum sehr klein gewählt werden kann. Dieser Sensor kann z.B. mehrere Teilbereiche überwachen, die dann dem ersten oder zweiten Raumbereich zugeordnet werden.

Bei einer bevorzugten Weiterbildung der Erfindung umfasst die Überwachungsvorrichtung einen gemeinsamen Sensor, der die Funktionen des ersten und zweiten Sensors wahrnimmt. Zur Durchführung der Funktionen des ersten und des zweiten Sensors sind dabei lediglich ein Sender und ein Empfänger notwendig. Der Sensor kann stattdessen zum Beispiel eine Schaltung mit zwei verschiedenen Schaltungsteilen umfassen, wobei ein Schaltungsteil lediglich die Detektion eines Signals verarbeitet, mit der also ein Objekt erkannt wird, während der andere Schaltungsteil zum Beispiel die Entfernungsbestimmung vornimmt. In der Regel wird die Entfernungsbestimmung einen aufwendigeren elektronischen Schaltungsteil und deshalb meist auch einen höheren Energieverbrauch erfordern als der Schaltungsteil, der lediglich mit einfacher Signaldetektion befasst ist. In vorteilhafter Weise ist bei dieser Weiterbildung lediglich ein gemeinsamer Sensor bzw. eine gemeinsame Vorrichtung in Form eines Senders und eines Empfängers vorhanden, es werden also nicht zwei Sender oder zwei Empfänger benötigt, sodass Kosten und auch Energie eingespart werden können. Der Schaltungsteil, der für die Entfernungsbestimmung zuständig ist, wird in einen Stand-by-Modus versetzt und bei Detektion eines Objekts in den Betriebsmodus überführt. Diese Umschaltung wird durch den Schaltungsteil vorgenommen, der lediglich die Detektion eines Signals vornimmt, sobald ein Objekt detektiert wird; ferner ist es denkbar, dass dieser Schaltungsteil dann selbst in den Stand-by-Modus wechselt und gegebenenfalls durch den mit der Entfernungsmessung befassten Schaltungsteil oder nach einer fest vorgegebenen Zeitspanne wieder zurück in den Betriebsmodus wechselt, während sodann der mit der Entfernungsmessung befasste Schaltungsteil wiederum in den Stand-by-Modus übergeht. Auf diese Weise sind zum einen immer nur ein Sender und ein Empfänger in Betrieb, zum anderen kann auch stets einer der beiden Schaltungsteile weniger Energie verbrauchen und auf Stand-by geschaltet sein. Beide Schaltungsteile können auch in einen integrierten Schaltkreis kombiniert sein, zum Beispiel in einen Mikrocontroller.

### Ausführungsbeispiel:

Ein Ausführungsbeispiel der Erfindung dargestellt und wird nachstehend unter Angabe weiterer Einzelheiten und Vorteile näher erläutert. Im Einzelnen zeigt:
- Figur 1: eine sanitäre Anlage mit einer Sanitärarmatur und einer Überwachungsvorrichtung gemäß der Erfindung,
- Figur 2: eine Sanitärarmatur mit gemeinsamem Sensor gemäß der Erfindung, sowie
- Figur 3: eine schematische Darstellung einer Schaltung eines gemeinsamen Sensors mit gemeinsamem Sender-Empfänger-Modul gem. der Erfindung.

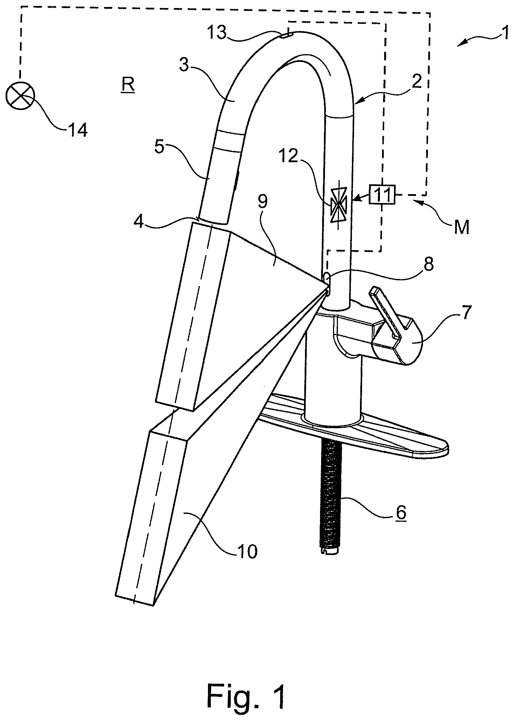

Figur 1 zeigt eine sanitäre Anlage 1 mit einer Sanitärarmatur 2, die aus einem Wasserhahn 3 mit einem Auslass 4 besteht und über eine Überwachungsvorrichtung M verfügt. Der Auslass 4 ist an einem abnehmbaren Auslassstück 5 angeordnet, dass über einen (hier nicht weiter dargestellten) Schlauch aus dem Wasserhahn 3 hinaus gezogen werden kann. Die Sanitärarmatur 2 verfügt über eine Wasserzuleitung 6 und einen Hebel 7 für eine manuelle Bedienung. Im unteren Bereich des Wasserhahns 3 ist ein erster Sensor 8 vorgesehen, der als ToF-Sensor ausgebildet ist. Dieser ToF-Sensor 8 kann unterschiedliche Raumbereiche 9, 10 überwachen. Der ToF-Sensor 8 wirkt mit einer Kontrolleinheit 11 zusammen, die im vorliegenden Fall lediglich schematisch eingezeichnet ist. Diese Kontrolleinheit 11 kann wiederum ein Ventil 12 als Stellglied für den Wasserfluss bedienen.

Darüber hinaus ist ein Infrarotdetektor als zweiter Sensor 13 vorgesehen, der im oberen Bereich des Wasserhahns 3 angeordnet ist und wahrnehmen kann, ob eine Person sich der Armatur 2 nähert oder nicht. Zudem ist noch ein weiterer Sensor 14 in der Funktion des zweiten Sensors vorhanden, nämlich als Bewegungsmelder. Dieser kommuniziert über Bluetooth mit der Kontrolleinheit 11, was lediglich schematisch über eine gestrichelte Verbindung in Figur 1 dargestellt ist. Betritt eine Person den Raum, so wird dies durch den Bewegungsmelder 14 erfasst. Eine weitere Erfassung der Person erfolgt durch den IR-Detektor 13. Es ist auch denkbar, diese drei Sensoren 14, 13 und 8 in eine Kaskade zu schalten, sodass der Bewegungsmelder 14 den Sensor 13 vom Stand-by-Modus in einen Betriebsmodus schaltet, und anschließend der Sensor 13 den ToF-Sensor 8 in den Betriebsmodus umschaltet. Die Sensoren 13, 14 überwachen den restlichen Raum der sanitären Anlage R.

Wenn die Person sich die Hände waschen will, kann sie entweder eine manuelle Bedingung über den Hebel 7 vornehmen, oder streckt Sie die Hände unter den Wasserhahn 3 bzw. unter den Auslass 4, so gelangt sie mit ihren Händen entweder in den Raumbereich 9 oder in den Raumbereich 10. Gegebenenfalls kann die manuelle Betätigung des Hebels 7auch dazu dienen, die quantitative Einstellung des Wasserflusses vorzugnehmen. Im Raumbereich 9 wird die Hand vom ToF-Sensor 8 erfasst, und dieser schaltet das Wasser über die Kontrolleinheit 11 ein, jedoch mit einem geringeren Druck, sodass die Person nicht nass gespritzt wird. Gelangt die Hand in den Raumbereich 10, so wird ein höherer Wasserfluss angeschaltet, da die Gefahr des spritzenden Wassers nicht so groß ist.

Entfernt sich die Person wieder, so wird dies zunächst vom ToF-Sensor 8 registriert, so dass dieser über die Kontrolleinheit 11 auch das Wasser am Ventil 12 abschalten kann. Verlässt die Person den Raum, so erfolgt ebenfalls keine Detektion mehr durch die Sensoren 13 und 14, sodass ggf. in Zusammenhang mit einer Zeitschaltuhr nach wenigen Sekunden auch der ToF-Sensor abgeschaltet werden kann, da alle Sensoren übereinstimmend kein Signal mehr liefern. Ggf. kann über die Kontrolleinheit 11 z.B. auch das Licht in dem Raum ausgeschaltet werden, in dem sich die sanitäre Anlage befindet.

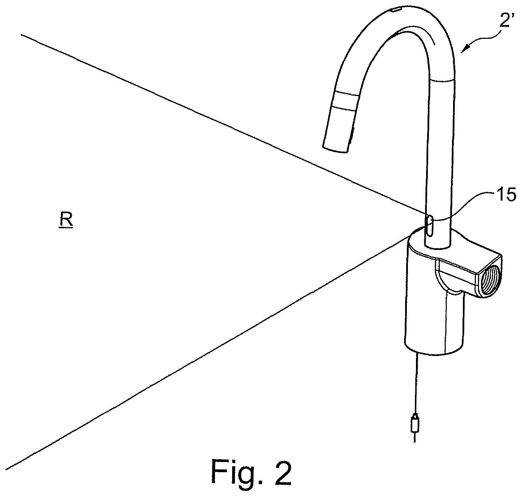

Figur 2 zeigt eine Sanitärarmatur 2', bei der die Sensoren 8, 13 zur Überwachung des ersten und zweiten Raumbereiches 9, 10, R in einen gemeinsamen Sensor 15 integriert sind. Wie bei einer Quadrantendiode kann hier ein gesamter Erfassungsbereich in mehrere Teilbereiche eingeteilt und den jeweiligen Raumbereichen zugeordnet werden. Die Zuordnung kann ggf. über eine entsprechende Optik erfolgen.

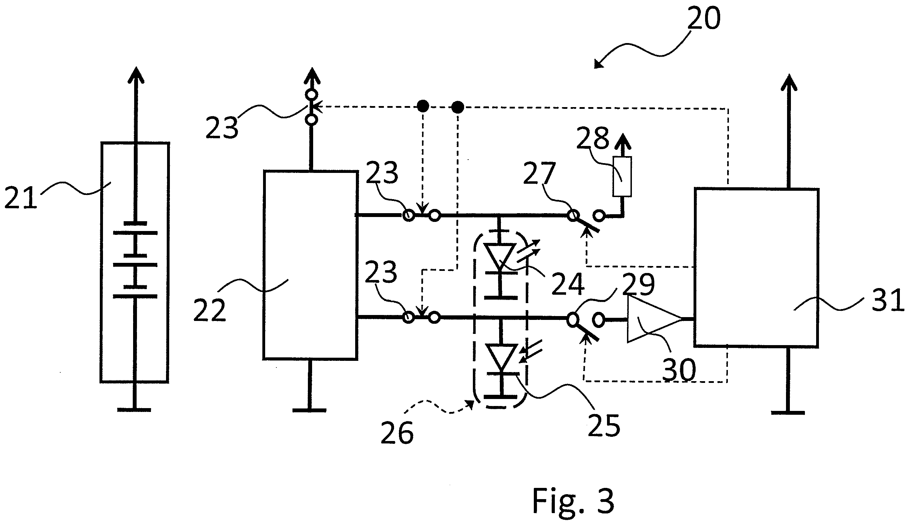

Figur 3 zeigt eine Schaltung mit einem gemeinsamen Sensor 20 mit gemeinsamem Sender 24 und gemeinsamem Empfänger 25, welche beide die Funktionen des ersten und zweiten Sensors wahrnehmen.
Die beiden IR-Dioden 24, 25 werden 2fach verwendet: Einmal zur simplen Projekt - Anwesenheitsüberprüfung (stromsparend, mit einigen µS Sendesignalen) und zum zweiten zur genauen Entfernungsmessung des Objektes (in der Funktion eines ToF-Sensors 22 mit höherem Stromverbrauch, misst mit einigen Sendesignalen einer Dauer im Millisekunden-Bereich). Die IR-Leuchtdiode 24 und die IR-Photodiode 25 sind platzsparend in einem Gehäuse 26 untergebracht. Dieses Gehäuse 26 kann als eigenes Bauteil in der Armatur eingebaut werden, zum Beispiel im Bereich einer Öffnung zur anschließenden Detektion.

Der Mikrocontroller 31 arbeitet immer im Stromsparmodus (einfache Reflexionsmessung), bis er ein Objekt detektiert. Dann wird auf den stromintensiven Messmodus (ToF) umgeschaltet und die Entfernung genau bestimmt. Das Ein- bzw. Ausschalten des ToF-Sensors 22 erfolgt über die schematisch eingezeichneten Schalter 23. Während der weitaus überwiegenden Zeit wird so bei einer Armatur Strom gespart.
Batteriebetriebene Systeme sind möglich (hier: Batterie-Stromversorgung 21). Ferner kann der Mikrocontroller 31 über die Schalter 27 bzw. 29 jeweils den Sender 24 bzw. Empfänger 25 ausschalten.

Der Widerstand 28 dient der Strombegrenzung. Das Ausgangssignal des ToF-Sensors 22 wird dem Mikrocontroller 31 über einen Operationsverstärker 30 als Signalverstärker zugeführt.

Durch die Benutzung von zumindest einem IR-Sensor für beide Auswertungen kann ein viel kleinerer Aufbau gewählt werden. Das Design der Armatur wird nur durch ein kleineres Fenster gestört, Kosten werden auch gespart.

### Bezugszeichenliste:

- 1: Sanitäre Anlage
- 2: Sanitärarmatur
- 2': Sanitärarmatur
- 3: Wasserhahn
- 4: Wasserauslass
- 5: Ausziehbarer Auslass
- 6: Wasserzufuhrleitung
- 7: manuell bedienbarer Hebel
- 8: ToF-Sensor
- 9: Teilraumbereich
- 10: Teilraumbereich
- 11: Kontrolleinheit
- 12: Ventil/Stellglied
- 13: IR-Detektor
- 14: Bewegungsmelder
- 15: gemeinsamer Sensor
- 20: gemeinsamer Sensor
- 21: Batterie
- 22: ToF-Sensor
- 23: EIN / AUS- Schalter für ToF-Sensor
- 24: Transmitter-IR - Diode (Sender)
- 25: Receiver-IR - Diode (Empfänger)
- 26: Gehäuse für IR-Dioden
- 27: EIN / AUS- Schalter für Sender
- 28: Strombegrenzung (Widerstand)
- 29: EIN / AUS- Schalter für Empfänger
- 30: Signal - Verstärker
- 31: Mikrocontroller mit analogem Eingang für Signalauswertung

- M: Überwachungsvorrichtung
- R: zweiter Raumbereich

## Patentansprüche

1. Überwachungsvorrichtung (M) für eine sanitäre Anlage (1), mit einem ersten Sensor (8) zur Überwachung der Anwesenheit von Personen in einem ersten Raumbereich (9, 10) in der Umgebung der sanitären Anlage (1) und mit einem zweiten Sensor (13, 14) zur Überwachung eines zweiten Raumbereichs (R) in der Umgebung der sanitären Anlage (1), wobei der erste Sensor (8) über einen Betriebsmodus und einen Standby-Modus verfügt und der zweite Sensor (13, 14) dazu ausgebildet ist, bei einer vorbestimmten Detektion den ersten Sensor von einem Standby-Modus in einen Betriebsmodus zu schalten, **dadurch gekennzeichnet, dass** der erste Sensor (8) als Distanzsensor, insbesondere als TOF-Sensor ausgebildet ist und dass eine Kontrolleinheit (11) zur Kontrolle des ersten Sensors (8) vorgesehen ist, die dazu ausgebildet ist, in Abhängigkeit eines Ausgangssignals des ersten (8) und des zweiten Sensors (13, 14) den ersten Sensor (8) vom Betriebsmodus in den Standby-Modus zu schalten.

2. Überwachungsvorrichtung (M) nach Anspruch 1, **dadurch gekennzeichnet, dass** die Kontrolleinheit (11) dazu ausgebildet ist, den ersten Sensor (8) dann vom Betriebsmodus in den Standby-Modus zu schalten, wenn der erste (8) und der zweite Sensor (13, 14) kein Objekt detektieren, wobei insbesondere zusätzlich noch eine Zeitschaltvorrichtung vorgesehen ist, um eine vorbestimmte Zeitspanne abzuwarten, bis eine Umschaltung in den Standby-Modus des zweiten Sensors erfolgt.

3. Überwachungsvorrichtung (M) nach einem der vorgenannten Ansprüche, **dadurch gekennzeichnet, dass** der zweite Sensor (13, 14) und/oder die Kontrolleinheit (11) dazu ausgebildet ist/sind, lediglich solche Signale auszuwerten und/oder weiterzuleiten, welche zu einem Objekt in einem vorbestimmten Distanzbereich gehören.

4. Überwachungsvorrichtung (M) nach einem der vorgenannten Ansprüche, **dadurch gekennzeichnet, dass** der zweite Sensor (13, 14) als Bewegungsmelder und/oder als Infrarotsensor ausgebildet ist.

5. Überwachungsvorrichtung (M) nach einem der vorgenannten Ansprüche, **dadurch gekennzeichnet, dass** der erste Sensor (8) und/oder der zweite Sensor (13) an einer Armatur (2) der sanitären Anlage (1) anbringbar ist und/oder in eine Armatur (2) integrierbar ist.

6. Überwachungsvorrichtung (M) nach einem der vorgenannten Ansprüche, **dadurch gekennzeichnet, dass** der erste Sensor wenigstens zwei Teilsensoren aufweist, welche jeweils zwei unterschiedliche, insbesondere überlappende Raumbereiche (9, 10) in der Umgebung der sanitären Anlage (1) zu überwachen.

## Claims

1. A monitoring device (M) for a sanitary installation (1), having a first sensor (8) for monitoring the presence of people in a first spatial region (9, 10) in the vicinity of the sanitary installation (1) and having a second sensor (13, 14) for monitoring a second spatial region (R) in the vicinity of the sanitary installation (1), the first sensor (8) having an operating mode and a standby mode and the second sensor (13, 14) being designed to switch the first sensor from a standby mode to an operating mode in the event of a predetermined detection, **characterised in that** the first sensor (8) is designed as a distance sensor, in particular as a TOF sensor, and **in that** a control unit (11) for controlling the first sensor (8) is provided and is designed to switch the first sensor (8) from the operating mode to the standby mode on the basis of an output signal of the first (8) and the second sensor (13,14).

2. The monitoring device (M) according to claim 1, **characterised in that** the control unit (11) is designed to subsequently switch the first sensor (8) from the operating mode to the standby mode if the first (8) and the second sensor (13, 14) do not detect an object, a timing device in particular additionally being provided in order to wait for a predetermined period of time until a switchover to the standby mode of the second sensor takes place.

3. The monitoring device (M) according to any one of the preceding claims, **characterised in that** the second sensor (13, 14) and/or the control unit (11) is/are designed to only evaluate and/or forward signals which belong to an object in a predetermined distance range.

4. The monitoring device (M) according to any one of the preceding claims, **characterised in that** the second sensor (13, 14) is designed as a motion detector and/or as an infrared sensor.

5. The monitoring device (M) according to any one of the preceding claims, **characterised in that** the first sensor (8) and/or the second sensor (13) can be attached to a fitting (2) of the sanitary installation (1) and/or can be integrated into a fitting (2).

6. The monitoring device (M) according to any one of the preceding claims, **characterised in that** the first sensor has at least two part sensors, each of which monitors two different, in particular overlapping spatial regions (9, 10) in the vicinity of the sanitary installation (1).

## Revendications

1. Dispositif de surveillance (M) pour une installation sanitaire (1), comprenant un premier capteur (8) pour surveiller la présence de personnes dans une première zone spatiale (9, 10) dans l'environnement de l'installation sanitaire (1) et un second capteur (13, 14) pour surveiller une deuxième zone spatiale (R) dans l'environnement de l'installation sanitaire (1), dans lequel le premier capteur (8) dispose d'un mode de fonctionnement et d'un mode veille et le second capteur (13, 14) est conçu pour, lors d'une détection prédéterminée, commuter le premier capteur du mode veille au mode de fonctionnement, **caractérisé en ce que** le premier capteur (8) est conçu sous la forme d'un capteur de distance, en particulier sous la forme d'un capteur TOF et qu'une unité de commande (11), pour commander le premier capteur (8), est prévue, conçue pour commuter le premier capteur (8) du mode de fonctionnement au mode veille en fonction d'un signal de sortie du premier (8) et du second capteur (13, 14).

2. Dispositif de surveillance (M) selon la revendication 1, **caractérisé en ce que** l'unité de commande (11) est conçue pour commuter le premier capteur (8) du mode de fonctionnement au mode veille lorsque les premier (8) et second capteurs (13, 14) ne détectent pas d'objet, dans lequel, en particulier, un dispositif de minuterie, est en outre prévu pour attendre un intervalle temporel prédéterminé jusqu'à ce qu'une commutation vers le mode veille du second capteur soit effectuée.

3. Dispositif de surveillance (M) selon l'une quelconque des revendications précédentes, **caractérisé en ce que** le second capteur (13, 14) et/ou l'unité de commande (11) est/sont conçus pour évaluer et/ou transmettre uniquement les signaux, qui appartiennent à un objet dans une plage de distance prédéterminée.

4. Dispositif de surveillance (M) selon l'une quelconque des revendications précédentes, **caractérisé en ce que** le second capteur (13, 14) est conçu sous la forme d'un détecteur de mouvement et/ou sous la forme d'un capteur infrarouge.

5. Dispositif de surveillance (M) selon l'une quelconque des revendications précédentes, **caractérisé en ce que** le premier capteur (8) et/ou le second capteur (13) peuvent être montés sur une robinetterie (2) de l'installation sanitaire (1) et/ou peuvent être intégrés dans une robinetterie (2).

6. Dispositif de surveillance (M) selon l'une quelconque des revendications précédentes, **caractérisé en ce que** le premier capteur comporte au moins deux capteurs partiels, lesquels surveillent respectivement deux zones spatiales (9, 10) différentes, en particulier se chevauchant dans l'environnement de l'installation sanitaire (1).
